# EUROPEAN PATENT APPLICATION

(11) **EP 4 725 743 A1**
(43) Date of publication of application: **15.04.2026**
(21) Application number: 25200623.4
(22) Date of filing: 05.09.2025
(51) Int. Cl.: B60L 3/00, B60L 53/30, B60L 53/31, B60L 53/64, B60L 53/65, B60L 53/66, B60L 53/68, G06Q 30/04

(54) **CHARGING CONTROL SYSTEM AND VEHICLE**

(30) Priority: 09.10.2024 JP 2024177119
(71) Applicant: TOYOTA JIDOSHA KABUSHIKI KAISHA, Toyota-shi, Aichi-ken 471-8571 (JP)
(72) Inventor: SHIRAISHI, Ryo, Toyota-shi, 471-8571 (JP)
(74) Representative: D Young & Co LLP

(57) **Abstract**

A charging control system (100) includes an ECU (10) that switches a setting of scheduled charging between valid and invalid, the scheduled charging performing charging at a predetermined time, and a controller (40) that selects a charging method in the charging. The controller (40) selects PnC billing when the setting of the scheduled charging in the ECU (10) is invalid, and selects EIM billing when the setting of the scheduled charging in the ECU (10) is valid.

## Description

### CROSS REFERENCE TO RELATED APPLICATIONS

This nonprovisional application is based on Japanese Patent Application No. 2024-177119 filed on October 9, 2024 with the Japan Patent Office, the entire contents of which are hereby incorporated by reference.

### BACKGROUND

### Field

The present disclosure relates to a charging control system and a vehicle.

### Description of the Background Art

Japanese Patent Laying-Open No. 2020-048246 discloses that a vehicle is charged according to a charging schedule from a time of connection to a charging facility.

### SUMMARY

Although not clearly described in Japanese Patent Laying-Open No. 2020-048246, a plug and charge (PnC) billing (time-based billing according to a plug-in time) is known as a billing method for charging. When PnC billing is performed in charging according to the charging schedule (scheduled charging), there is a risk that billing will occur automatically even during a period of time in which charging is not performed (a period of time in which plugging in is performed in before or after the charging schedule). In PnC, since a user assumes that the charging sequence will automatically start immediately after plugging in, the user is less likely to notice that billing is occurring though charging will not start until a charging start time of a charging schedule. In addition, since the charging sequence (billing) will continue automatically after a charging end time of the charging schedule, the user is less likely to notice in PnC that billing is occurring after the completion of charging. Therefore, in PnC, billing (unintended billing for the user) may occur during a period in which charging is not being performed.

The present disclosure has been made to solve the problem described above. An object of the present disclosure is to provide a charging control system and a vehicle that can prevent the occurrence of unintended billing for a user of a vehicle capable of scheduling charging when the vehicle is charged at a charging stand compatible with PnC billing.

A charging control system according to a first aspect of the present disclosure is a charging control system that controls charging from a charging stand to a power storage device of a vehicle. The charging control system includes a charge setting device that switches a setting of scheduled charging between valid and invalid, the scheduled charging performing the charging at a predetermined time, and a billing selection device that selects a billing method in the charging. The billing selection device selects PnC billing when the setting in the charge setting device is invalid, and selects external authentication billing when the setting in the charge setting device is valid.

A vehicle according to a second aspect of the present disclosure includes the charging control system according to the first aspect described above.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a configuration of a charging control system according to an embodiment.
Fig. 2 is a sequence diagram showing control of the charging control system according to the embodiment.
Fig. 3 shows a screen for requesting selection of an EIM billing method according to the embodiment.
Fig. 4 is a sequence diagram showing control of the charging control system after selection of a billing method according to the embodiment.
Fig. 5 is a sequence diagram showing control of a charging control system after selection of a billing method according to a modification of the embodiment.
Fig. 6 shows a configuration of a charging control system according to the modification of the embodiment.

### DESCRIPTION OF THE PREFERRED EMBODIMENTS

An embodiment of the present disclosure will be described with reference to the drawings. In the drawings referred to below, the same or corresponding components have the same reference characters allotted.

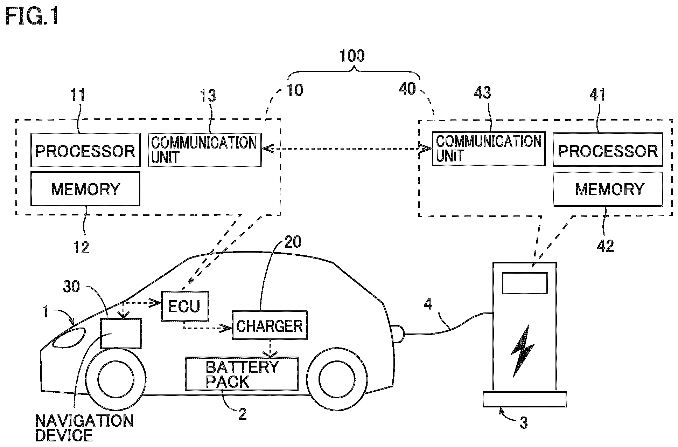

Fig. 1 shows a configuration of a charging control system 100 according to the present embodiment. Charging control system 100 controls charging from electric vehicle supply equipment (EVSE) 3 to a battery pack mounted in a vehicle 1. EVSE 3 is a time-based-billing charging station. Battery pack 2 and EVSE 3 are examples of the "power storage device" and the "charging station" in the present disclosure, respectively.

Charging control system 100 includes an electronic control unit (ECU) 10 mounted in vehicle 1 and a controller 40 mounted in EVSE 3. ECU 10 and controller 40 are examples of the "charge setting device" and the "billing selection device" in the present disclosure, respectively.

In addition to ECU 10 and battery pack 2, a charger 20 and a car navigation device 30 are mounted in vehicle 1. Battery pack 2 is a battery for traveling of vehicle 1. Vehicle 1 may be, for example, a plug-in hybrid electric vehicle (PHEV), a battery electric vehicle (BEV), and a fuel cell electric vehicle (FCEV).

Vehicle 1 can be electrically connected to EVSE 3 via a charging cable 4 to exchange electric power with EVSE 3. Electric power (charging power) from EVSE 3 is supplied to a power storage cell (not shown) of battery pack 2 via charger 20. Thus, the power storage cell is charged. The power storage cell is a secondary battery, typically a lithium-ion secondary battery. The lithium-ion secondary battery is a battery that uses lithium as a charge carrier, and may include a lithium-ion secondary battery including a liquid electrolyte, as well as an all-solid-state battery including a solid electrolyte. The power storage cell is not limited to the lithium-ion secondary battery and may also be a nickel-metal hydride secondary battery or any other secondary battery.

EVSE 3 is installed in, for example, a public facility (such as a shopping mall or a theme park). However, the location where EVSE 3 is installed is not limited to the above examples.

ECU 10 includes a processor 11, a memory 12, and a communication unit 13. Memory 12 stores a program executed by processor 11, as well as information (e.g., maps, formulas, and various parameters) used in the program. Communication unit 13 includes various communication interfaces (I/Fs). Communication unit 13 communicates with each device (e.g., car navigation device 30) in vehicle 1 via controller area network (CAN) communication.

Processor 11 transmits a control signal for controlling charger 20 to charger 20 via communication unit 13. Charger 20 charges battery pack 2 in accordance with the control signal from processor 11.

Controller 40 includes a processor 41, a memory 42, and a communication unit 43. Memory 42 stores a program executed by processor 41, as well as information (e.g., maps, formulas, and various parameters) used in the program. Communication unit 43 includes various communication I/Fs.

Each of processors 11, 41 is, for example, a central processing unit (CPU) or a micro-processing unit (MPU). Processors 11, 41 respectively read a system program and a control program, loads the programs into memories 12, 42, and executes the programs to perform various types of processing. In this specification, the term "processor" is not limited to a narrowly defined processor that performs processing in a stored program mode, but may include a hard-wired circuit such as an application specific integrated circuit (ASIC) or a field-programmable gate array (FPGA). Thus, the term "processor" may be interpreted as processing circuitry whose processing is defined in advance by a computer-readable code and/or the hard-wired circuit.

Processor 11 of ECU 10 is capable of switching a setting of scheduled charging between valid and invalid. The scheduled charging performs charging at a predetermined time. Also, processor 11 is capable of changing the setting of scheduled charging. Scheduled charging is an example of the "reserved charging" in the present disclosure.

Specifically, car navigation device 30 accepts an operation of setting scheduled charging by the user. Information regarding a start time and an end time of the scheduled charging (hereinafter referred to as "scheduled charging information") set (specified) by the user is transmitted to communication unit 13 via CAN communication. Processor 11 performs a setting of scheduled charging and changes the setting of scheduled charging in accordance with the information on scheduled charging obtained by communication unit 13. The information on scheduled charging set by processor 11 is stored in memory 12. Processor 11 controls charger 20 based on the information on the set scheduled charging. As a result, charging is performed during a time period based on the information on scheduled charging. Only one of the start time and end time can be set.

When the information on scheduled charging is not set, charging (hereinafter referred to as "immediate charging") is started immediately after connection between EVSE 3 and vehicle 1. Immediate charging may be, for be example, charging that is started immediately (e.g., within five minutes) after completion of billing authentication between vehicle 1 and EVSE 3.

ECU 10 (communication unit 13) obtains various types of information from EVSE 3 (communication unit 43). For example, ECU 10 obtains, from EVSE 3, information on electric power that can be supplied from EVSE 3, authentication information of EVSE 3, or the like. The ECU (communication unit) that receives the above various types of information may be provided separately from ECU 10.

The authentication information of EVSE 3 includes, for example, information indicating that EVSE 3 is equipment compatible with the plug and charge (PnC) system. Specifically, ECU 10 (communication unit 13) transmits, to EVSE 3, AuthorizationReq (hereinafter referred to as a request signal) for inquiring whether EVSE 3 is equipment compatible with the PnC system. In response to the request signal, EVSE 3 transmits, to ECU 10, AuthorizationRes (hereinafter referred to as a response signal) indicating whether EVSE 3 is compatible with the PnC system. In other words, the response signal corresponds to the authentication information described above.

The PnC system refers to a system in which processes such as billing authentication and charging are automatically performed by merely connecting charging cable 4 of EVSE 3 to vehicle 1. The ECU that determines whether EVSE 3 is compatible with the PnC system may be provided separately from ECU 10.

EVSE 3 is compatible with an external identification means (EIM) system. The EIM system refers to a system that requires a user's operation to perform the processes such as billing authentication and charging.

Controller 40 of EVSE 3 selects a billing method to be used in charging. Specifically, controller 40 determines, as the billing method, either billing via the PnC system (hereinafter referred to as PnC billing) or billing via the EIM system (hereinafter referred to as EIM billing). EIM billing is an example of the "external authentication billing" in the present disclosure.

When PnC billing is performed during scheduled charging, there is a risk that billing will occur automatically even during a period of time in which charging is not occurring (a period of time in which plugging in is performed before or after the charging schedule). In PnC, since the user assumes that the charging sequence will automatically start immediately after plugging in, the user is less likely to notice that billing is occurring though charging will not start until the charging start time of the charging schedule. Additionally, since the charging sequence (billing) will continue automatically after the charging end time of the charging schedule, in PnC, the user is less likely to notice that billing is occurring after the completion of charging. Thus, in PnC, billing may occur during a period in which charging is not being performed (unintended billing for the user).

In the present embodiment, thus, controller 40 selects PnC billing when the setting of scheduled charging in ECU 10 is invalid, and selects EIM billing when the setting of scheduled charging in ECU 10 is valid.

In EIM, billing is started after the authentication operation by the user, and thus, the user is more likely to notice that scheduled charging is set (i.e., there is a certain amount of time or more until the charging start time) in the authentication operation. Additionally, in EIM, the user is requested again to authenticate whether to continue the charging sequence at the charging end time of the charging schedule, and accordingly, the user is more likely to notice in EIM that the charging sequence (billing) will continue after the completion of charging. Thus, EIM can prevent the occurrence of billing (unintended billing for the user) during a period in which charging is not being performed. Details will be described with reference to the following flowchart.

### <Charging Sequence>

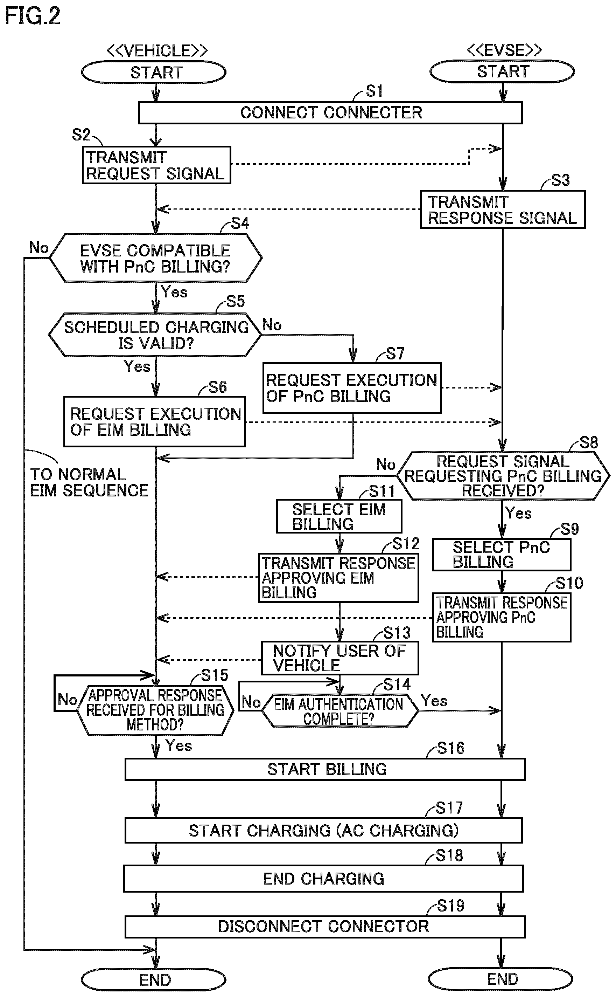

Fig. 2 shows an example charging sequence between vehicle 1 and EVSE 3. Processing by vehicle 1 shown in Fig. 2 is performed by ECU 10 (processor 11). Processing by EVSE 3 shown in Fig. 2 is performed by controller 40 (processor 41).

In step S1, charging cable 4 of EVSE 3 is connected to vehicle 1. This enables vehicle 1 to be charged.
In step S2, ECU 10 transmits a request signal for inquiring whether EVSE 3 is equipment compatible with the PnC system to EVSE 3 (communication unit 43) via communication unit 13.

In step S3, EVSE 3 transmits a response signal indicating whether it is compatible with the PnC system to vehicle 1 (communication unit 13) via communication unit 43.

In step S4, ECU 10 determines whether EVSE 3 is compatible with PnC billing based on the response signal transmitted from EVSE 3 in step S3. When EVSE 3 is compatible with PnC billing (Yes in S4), the processing proceeds to step S5. When EVSE 3 is not compatible with PnC billing (No in S4), the processing proceeds to the normal EIM billing sequence, and the sequence shown in Fig. 2 ends.

In step S5, ECU 10 determines whether the setting of scheduled charging is valid based on the information stored in memory 12. When the setting of scheduled charging is valid (Yes in S5), the processing proceeds to step S6. When the setting of scheduled charging is invalid (No in S5), the processing proceeds to step S7.

In step S6, ECU 10 (processor 11) transmits a request signal (ServiceDiscoveryReq) requesting the execution of EIM billing to EVSE 3 (communication unit 43) via communication unit 13. The processing then proceeds to step S15.

In step S7, ECU 10 (processor 11) transmits a request signal (ServiceDiscoveryReq) requesting the execution of PnC billing to EVSE 3 (communication unit 43) via communication unit 13. The processing then proceeds to step S15.

In step S8, EVSE 3 determines whether it has received the request signal (the request signal in S7) requesting PnC billing from vehicle 1. When the request signal for PnC billing has been received (Yes in S8), the processing proceeds to step S9. When the request signal for PnC billing has not been received (i.e., when the request signal for EIM billing has been received) (No in S8), the processing proceeds to step S11.

In step S9, EVSE 3 selects (determines) execution of PnC billing. In step S10, EVSE 3 then transmits a response signal (ServiceDiscoveryRes) approving PnC billing to vehicle 1 (communication unit 13) via communication unit 43. The processing then proceeds to step S16.

In step S11, EVSE 3 selects (determines) execution of EIM billing. In step S12, EVSE 3 then transmits a response signal (ServiceDiscoveryRes) approving EIM billing to vehicle 1 (communication unit 13) via communication unit 43. The processing then proceeds to step S13.

In step S13, EVSE 3 performs processing of notifying the user of vehicle 1 that EIM billing has been selected. Specifically, EVSE 3 (processor 41) transmits a signal indicating that EIM billing has been selected to vehicle 1 (communication unit 13) via communication unit 43. Vehicle 1 (communication unit 13) transmits the signal to car navigation device 30 or an unshown user terminal (e.g., a display terminal such as a smartphone or a tablet) held by the user. Upon receiving the signal, car navigation device 30 or the user terminal may display a message indicating that EIM billing has been selected. The signal may be transmitted directly from EVSE 3 to car navigation device 30 or the user terminal. The processing in step S13 may not be performed. The processing then proceeds to step S14.

The user can be notified that EIM billing has been selected, thus preventing the user from forgetting to perform the operation of authenticating billing. This can prevent a situation in which charging of vehicle 1 will not be started due to a failure of EIM billing authentication.

Further, the signal in step S13 may include information about scheduled charging. Thus, car navigation device 30 or the user terminal that has received the signal may display the charging start time and the charging end time of scheduled charging. This allows the user to stop charging at EVSE 3 based on the displayed charging start time and charging end time when, for example, billing is likely to occur during a period in which charging is not performed.

In step S14, EVSE 3 determines whether EIM authentication by the user is complete. When EIM authentication is complete (Yes in S14), the processing proceeds to step S16. When EIM authentication is not complete (No in S14), the processing in step S14 is repeated.

In step S15, ECU 10 determines whether it has received an approval response (response signal in S10 or S12) for the billing method from EVSE 3. When the approval response has been received (Yes in S15), the processing proceeds to step S16. When the approval response has not been received (No in S15), the processing of step S15 is repeated.

In step S16, billing based on the method selected in S9 or S11 is started between vehicle 1 and EVSE 3.

In step S17, charging between vehicle 1 and EVSE 3 is started. When scheduled charging is valid, charging is started at a start time corresponding to the schedule information. When scheduled charging is invalid, immediate charging is started.

In the present embodiment, charging (scheduled charging and immediate charging) between vehicle 1 and EVSE 3 is performed by AC charging.

In step S18, charging between vehicle 1 and EVSE 3 is ended. When scheduled charging is valid, charging is ended at an end time corresponding to the schedule information. When scheduled charging is invalid, charging may be ended as the state of charge (SOC) of battery pack 2 reaches a predetermined value (e.g., 100%).

In step S19, the connection between charging cable 4 of EVSE 3 and vehicle 1 is disconnected. Then, the sequence shown in Fig. 2 ends.

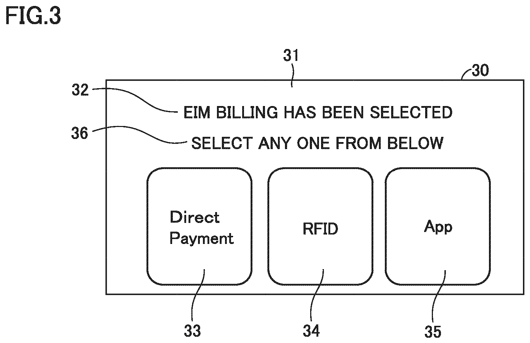

Fig. 3 shows car navigation device 30 (or a display screen 31) that has received the notification in step S13 of Fig. 2. Display screen 31 displays a message 32 indicating that EIM billing has been selected. The screen shown in Fig. 3 may also be displayed on the user terminal described above.

Display screen 31 displays selection buttons 33 to 35 for selecting a specific EIM billing method. Display screen 31 displays a message 36 requesting the selection of any one of the EIM billing methods respectively corresponding to selection buttons 33 to 35.

When selection button 33 is selected, the EIM billing method is set to "Direct Payment". "Direct Payment" refers to a method of directly paying a charging cost at EVSE 3. When selection button 33 is selected, EVSE 3 starts charging, and after the completion of charging, may issue a receipt indicating the charging cost or display a screen showing the cost. EVSE 3 may change to a state where it can accept a user's payment operation after the completion of charging.

When selection button 34 is selected, the EIM billing method is set to radio frequency identification (RFID). RFID is a method of authenticating a charging session by the user simply passing an RFID card over a card reader of EVSE 3. When authentication is successful, charging is started. The card reader may be changed to a state where it can read the RFID card in response to the selection of selection button 34.

When selection button 35 is selected, the EIM billing method is set to an application (App) method. The App method is a method of starting a charging session when the user logs in to a dedicated app. When selection button 35 is selected, EVSE 3 may be changed to a state where it waits for the user to log in to the app.

As described above, as the user is requested to select any one of a plurality of EIM billing methods when EIM billing is selected, the user can make payments by any EIM billing method. This enables the user to appropriately change the payment method depending on a situation, unlikely in the case where the EIM billing method is fixed to any one method.

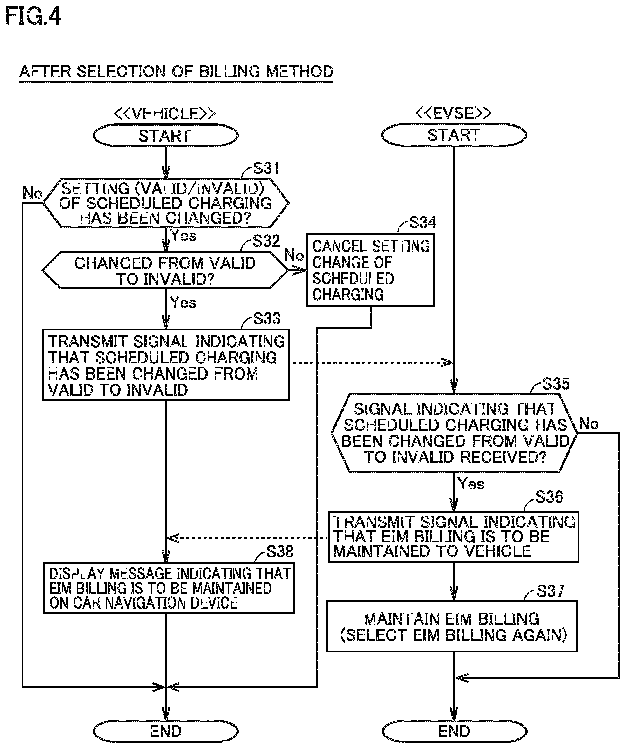

Fig. 4 is a sequence diagram showing example processing by ECU 10 and controller 40 after the selection of a billing method. "After the selection of a billing method " may be after the completion of authentication of a billing method.

In step S31, ECU 10 determines whether the user has changed the setting (valid/invalid) of scheduled charging. For example, ECU 10 determines that the scheduled charging has been changed to valid or invalid when an operation of changing the setting of scheduled charging has been performed in car navigation device 30 (or user terminal). When the scheduled charging has been changed to valid or invalid (Yes in S31), the processing proceeds to step S32. When the scheduled charging has not been changed to valid or invalid (No in S31), the processing ends.

In step S32, ECU 10 determines whether the setting of scheduled charging has been changed from valid to invalid. When the setting has been changed from valid to invalid (Yes in S32), the processing proceeds to step S33. When the setting has been changed from invalid to valid (No at S32), the processing proceeds to step S34.

In step S33, ECU 10 (processor 11) transmits a signal indicating that the setting of scheduled charging has been changed from valid to invalid to EVSE 3 (communication unit 43) via communication unit 13. The processing by vehicle 1 then proceeds to step S38.

In step S34, ECU 10 cancels the change of the setting of scheduled charging from invalid to valid. Then, the processing ends. Vehicle 1 may be prohibited from changing the setting of scheduled charging from invalid to valid.

As the change of the setting of scheduled charging from invalid to valid is canceled, scheduled charging can be prevented from being set even though PnC billing is continued.

In step S35, EVSE 3 determines whether communication unit 43 has received the signal transmitted from vehicle 1 in step S33. When the signal in S33 has been received (Yes in S35), the processing proceeds to step S36. When the signal in S33 has not been received (No in S35), the processing ends.

In step S36, EVSE 3 (processor 41) transmits a signal indicating that EIM billing is to be maintained to ECU 10 (communication unit 13) via communication unit 43. The processing then proceeds to step S37.

In step S37, EVSE 3 maintains the EIM billing. For example, EVSE 3 selects the currently selected EIM billing again. In step S37, EVSE 3 may not perform any processing related to the selection (change) of the billing method. Then, the processing by EVSE 3 ends.

As described above, when the setting of scheduled charging is changed from valid to invalid after the selection of EIM billing, maintaining the selection of EIM billing can prevent the charging sequence from becoming complicated due to a change of the billing method during the charging sequence.

In step S38, ECU 10 (processor 11) transmits a signal for displaying a message indicating that EIM billing is to be maintained to car navigation device 30 (or user terminal) via communication unit 13. Car navigation device 30 (or user terminal) displays the message in response to the receipt of the signal. Then, the processing by vehicle 1 ends.

As described above, in the present embodiment, EVSE 3 selects PnC billing when the setting of scheduled charging in ECU 10 is invalid, and selects EIM billing when the setting of scheduled charging in ECU 10 is valid. As a result, PnC billing is not performed when scheduled charging is performed, and thus, automatic billing can be prevented from occurring via PnC billing during a period in which charging is not performed (i.e., a period of time in which plugging in is performed before or after the charging schedule). This can prevent the occurrence of unintended billing for the user of the vehicle.

When the setting of scheduled charging is invalid, billing can be performed by selecting PnC billing without requiring a user's operation, thereby improving user's convenience.

In the present embodiment, AC charging is performed between vehicle 1 and EVSE 3. AC charging is often used when charging is performed at, for example, a charging facility of a user's home during the night. Thus, a night time period is often set as the scheduled charging time. In this case, if scheduled charging is applied at a public facility, there is a high possibility that charging will not be performed at all. Thus, selecting EIM billing instead of PnC billing when the setting of scheduled charging is valid, as described above, can prevent the accumulation of only the unintended billing for the user even though charging is not being performed.

### <Modification>

The above embodiment has described an example in which the change of the setting of scheduled charging is canceled when the setting of scheduled charging is changed from invalid to valid after the selection of the billing method, but the present disclosure is not limited thereto. In this case, ECU 10 may perform processing to stop charging (charging sequence). Stopping charging (charging sequence) means stopping even the communication state between vehicle 1 and EVSE 3.

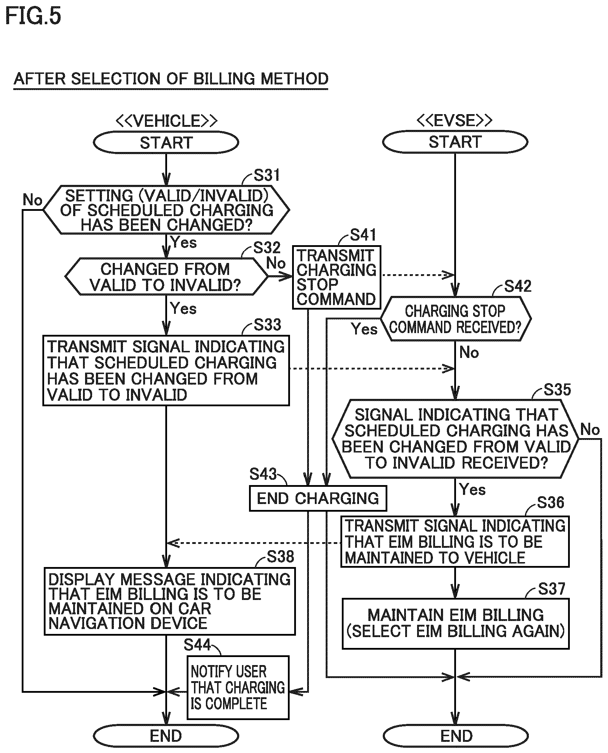

For example, in the example shown in Fig. 5, the processing of step S41 is performed instead of step S34 in Fig. 4. In step S41, ECU 10 transmits a charging stop command to EVSE 3. The processing then proceeds to step S43.

In step S42, EVSE 3 determines whether it has received the charging stop command in step S41. When the charging stop command has been received (Yes in S42), the processing proceeds to step S43. When the charging stop command has not been received (No in S42), the processing proceeds to step S35.

In step S43, charging (charging sequence) between vehicle 1 and EVSE 3 is ended. As a result, the communication state between vehicle 1 and EVSE 3 is interrupted. Then, the processing by vehicle 1 proceeds to step S44. The processing by EVSE 3 ends at step S43.

Stopping charging (charging sequence) as described above can stop the charging sequence when PnC billing is continued even though charging has not been started via scheduled charging (or even though charging is complete). This can effectively prevent the occurrence of unintended billing for the user.

In step S44, ECU 10 performs processing for notifying the user that charging (charging sequence) has been ended. For example, ECU 10 (processor 11) transmits a signal for displaying a message indicating that charging (charging sequence) has been ended to car navigation device 30 (or user terminal) via communication unit 13. The message may include a message prompting the user to perform the charging sequence (communication) with EVSE 3 again.

The above embodiment has described an example in which a signal indicating that scheduled charging has been switched between valid and invalid is transmitted from vehicle 1 to EVSE 3 when scheduled charging is switched between valid and invalid after the selection of a billing method, but the present disclosure is not limited thereto. After the selection of a billing method, the change of the setting of scheduled charging may be set to be inexecutable in vehicle 1. For example, only the change of scheduled charging from invalid to valid may be inexecutable after the selection of the billing method.

The above embodiment has described an example in which no information is transmitted from vehicle 1 to EVSE 3 when the setting of scheduled charging is changed from invalid to valid after the selection of a billing method, but the present disclosure is not limited thereto. In this case, a signal indicating that the setting of scheduled charging has been changed from invalid to valid may be transmitted from vehicle 1 to EVSE 3. Then, the processing proceeds to the determination in step S5 again, and execution of EIM billing may be requested by ECU 10.

The above embodiment has described an example in which the current billing method is maintained even if the setting of scheduled charging is changed after the selection of a billing method, but the present disclosure is not limited thereto. When the setting of scheduled charging is changed after the selection of a billing method, the billing method may be changed to a billing method corresponding to the changed setting of scheduled charging. For example, only when the setting of scheduled charging is changed from valid to invalid after the selection of EIM billing, the billing method may be changed (to PnC billing). Further, when only the start time is changed while the schedule setting is valid, it is desirable to continue EIM billing without any change.

The above embodiment has described an example in which controller 40 of EVSE 3 performs the processing of selecting a billing method, but the present disclosure is not limited thereto. For example, an external server different from vehicle 1 and EVSE 3 may perform the above selection processing.

The above embodiment has described an example in which a single ECU 10 is provided in vehicle 1, but the present disclosure is not limited thereto. A plurality of ECUs with different functions may be provided in vehicle 1.

The above embodiment has described an example in which charging between vehicle 1 and EVSE 3 is AC charging, but the present disclosure is not limited thereto. Charging between vehicle 1 and EVSE 3 may be DC charging.

The above embodiment has described an example in which a signal (a signal of S33) is transmitted from vehicle 1 to EVSE 3 when the setting of scheduled charging is changed from valid to invalid after the selection of the billing method, but the present disclosure is not limited thereto. The signal of S33 may not be transmitted from vehicle 1 to EVSE 3.

The above embodiment has described an example in which controller 40 of EVSE 3 selects a billing method, but the present disclosure is not limited thereto. The ECU of vehicle 1 may select the billing method.

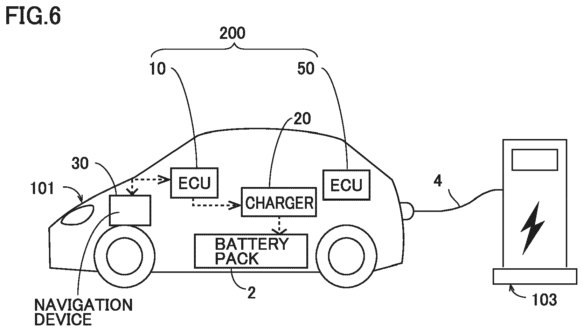

In the modification shown in Fig. 6, a vehicle 101 includes ECU 10 and an ECU 50. ECU 10 and ECU 50 constitute a charging control system 200. ECU 50 has the same function as that of EVSE 3 in the embodiment described above. Specifically, ECU 50 is capable of performing the pieces of processing shown in steps S8 to S14 shown in Fig. 2 and the pieces of processing shown in steps S35 to S37 shown in Fig. 4. Additionally, ECU 50 may transmit a signal indicating the selected billing method to an EVSE 103. In response to the receipt of the signal from ECU 50, EVSE 103 may start charging between vehicle 101 and EVSE 103 and the billing selected by ECU 50. ECU 50 and EVSE 103 are examples of the "billing selection device" and the "charging stand" in the present disclosure, respectively.

Although the embodiment of the present disclosure has been described, it should be understood that the present embodiment disclosed herein is illustrative and non-restrictive in every respect. The scope of the present disclosure is defined by the terms of the claims and is intended to include any modifications within the scope and meaning equivalent to the terms of the claims.

## Claims

1. A charging control system (100, 200) that controls charging from a charging stand (3, 103) to a power storage device (2) of a vehicle (1, 101), the charging control system comprising:
a charge setting device (10) that switches a setting of scheduled charging between valid and invalid, the scheduled charging performing the charging at a predetermined time; and
a billing selection device (40, 50) that selects a billing method in the charging,
wherein the billing selection device
selects PnC billing when the setting in the charge setting device is invalid, and
selects external authentication billing when the setting in the charge setting device is valid.

2. The charging control system according to claim 1, wherein the billing selection device maintains the selection of the external authentication billing when the setting is changed from valid to invalid after the selection of the external authentication billing.

3. The charging control system according to claim 1 or 2, wherein when the setting is changed from invalid to valid after the selection of the PnC billing by the billing selection device, the charge setting device cancels the change of the setting from invalid to valid.

4. The charging control system according to claim 1 or 2, wherein the charge setting device performs processing for stopping the charging when the setting is changed from invalid to valid after the selection of the PnC billing by the billing selection device.

5. The charging control system according to claim 1 or 2, wherein the charging is AC charging.

6. The charging control system according to claim 1 or 2, wherein the billing selection device performs, when selecting the external authentication billing, processing of notifying a user of the vehicle that the external authentication billing has been selected.

7. The charging control system according to claim 6, wherein
the external authentication billing includes a plurality of billing methods different from each other, and
the billing selection device performs, when selecting the external authentication billing, processing for requesting a user of the vehicle to select any one of the plurality of billing methods.

8. A vehicle (1, 101) comprising the charging control system according to claim 1.
